# EUROPÄISCHE PATENTSCHRIFT

(11) **EP 0 278 470 B1**
(45) Veröffentlichungstag und Bekanntmachung des Hinweises auf die Patenterteilung: **08.05.1996**
(21) Anmeldenummer: 88101843.6
(22) Anmeldetag: 09.02.1988
(51) Int. Cl.: C08L 23/10

(54) **Polypropylen-Formmasse**
Polypropylene moulding composition
Composition de moulage à base de polypropylène

(30) Priorität: 11.02.1987 DE 3704207
(43) Veröffentlichungstag der Anmeldung: 17.08.1988
(73) Patentinhaber: HOECHST AKTIENGESELLSCHAFT, D-65926 Frankfurt am Main (DE)
(72) Erfinder: Helberg, Jürgen, Dr., D-6233 Kelkheim Taunus (DE); Heufer, Gert, Dr., D-6232 Bad Soden am Taunus (DE); Kloos, Friedrich, Dr., D-6500 Mainz (DE); Löw, Wolfgang, D-6097 Trebur (DE)

(56) Entgegenhaltungen:
- EP-A- 0 028 085
- EP-A- 0 137 482
- DE-A- 1 188 279

## Beschreibung

Die Erfindung bezieht sich auf eine Polypropylen-Formmasse mit verbessertem Verarbeitungsverhalten und verbesserten Eigenschaften.

Bei der Verarbeitung von Polypropylen erweisen sich Verarbeitungsgeschwindigkeit und Eigenschaftsniveau in vielen Fällen als unzureichend. Es hat daher nicht an Versuchen gefehlt, diesen Mangel zu beseitigen.

Es ist bekannt, daß teilkristalline Thermoplaste, wie das Polypropylen, durch Zugabe von geeigneten Kristallisiationskeimen, sogenannten Nukleierungsmitteln, in vielen Fällen hinsichtlich Verarbeitungsverhalten und Eigenschaften positiv beeinflußt werden können. Die Nukleierung führt zu einem feinsphärolithischen Gefüge und zu einer höheren Kristallisationstemperatur.

Die Folge davon ist, daß as herzustellende Produkt bereits bei höherer Temperatur formstabil wird und deshalb früher der Form entnommen werden kann. Daraus ergibt sich beim Spritzguß eine wesentliche Verkürzung der Zykluszeit, insbesondere bei dickwandigen Teilen, bei der Extrusion eine Erhöhung der Abzugsgeschwindigkeit.

Das feinsphärolithische Gefüge führt zu höherer Transparenz und aufgrund der höheren Kristallisationstemperatur zu erhöhter Kristallinität. Gleichzeitig wird eine Verbesserung von Härte und Steifigkeit der daraus hergestellten Formteile, jedoch eine Verminderung der Zähigkeitseigenschaften erreicht. Dieser unerwünschte Effekt hat den Einsatz von Nukleierungsmitteln in vielen Fällen erheblich eingeschränkt.

Es ist bekannt, daß durch Zusatz von γ-Chinacridon zu hochmolekularem Propylen-Homopolymer die Härte und Zähigkeit der daraus hergestellten Formteile erhöht wird (vgl. DE-AS 1 188 279). α-und β-Chinacridon sind nur wenig wirksam, sie erhöhen die Zähigkeit überhaupt nicht, nur die Härte.

Weiterhin ist die Verwendung von Aluminium-p-t-butylbenzoat und Dibenzylidensorbitol als Nukleierungsmittel für Proplencopolymere bekannt (vgl. EP-A 137 482). Allerdings wird zur Erhöhung oder Erhaltung der Tieftemperaturzähigkeit Talkum zugesetzt. Man erreicht eine Verbesserung der Transparenz und eine zufriedenstellende Steifheit und Tieftemperaturzähigkeit. Eine Verbesserung der Härte wird nicht erwähnt.

Es bestand die Aufgabe, die Verbesserung der Zähigkeit und gleichzeitig damit auch die der Härte von Formteilen aus hochmolekularem Propylenpolymer zu erreichen.

Gelöst wird diese Aufgabe durch ein Verfahren nach Anspruch 1, dessen nähere Ausgestaltungen in den Unteransprüchen 2 und 3 angegeben sind.

Für das erfindungsgemäße Verfahren eignen sich Homopolymerisate und Copolymerisate des Propylens mit Ethylen oder Buten, welche ein hohes Molekulargewicht besitzen. Ihr Schmelzindex MFI 230/5 ist kleiner oder gleich 5 g/10 min (MFI 230/2,16 ≤ ca. 1 g/l0 min), vorzugsweise kleiner oder gleich 2 g/10 min (MFI 230/2,16 ≤ ca. 0,5 g/10 min).

Als Nukleierungsmittel werden eingesetzt Natriumbenzoat, Natriummontanat, Calciummontanat, Aluminium-p-tert-butylbenzoat, Naphthalimid, Dibenzylidensorbitol und Talkum ultrafein. Bevorzugt werden Natriumbenzoat und Talkum, vorzugsweise ultrafein, insbesondere Natriumbenzoat. Die Korngröße dieser Nukleierungsmittel ist kleiner oder gleich 20 µm, vorzugsweise kleiner oder gleich 10 µm. Die Stoffe werden dem Polymeren in einer Menge von 0,001 bis 0,5 Gew.-%, vorzugsweise 0,001 bis 0,15 Gew.-% zugesetzt.

Nach dem erfindungsgemäßen Verfahren kann die Zusammensetzung übliche, die Verarbeitung erleichternde und die physikalischen und chemischen Eigenschaften verbessernde Zusatzstoffe enthalten. Als solche sind zu nennen: Licht- und Wärmestabilisatoren, Antioxidantien, Antistatika, Gleitmittel, Antiblockmittel sowie Füll- und Verstärkungsstoffe, Farbpigmente, synthetische und natürliche Harze, kautschukartige Produkte und Flammschutzmittel. Die erste Gruppe ist in der Zusammensetzung im allgemeinen in einer Menge von 0,01 bis 5 Gew.-%, berechnet auf die Menge Polymer (+Füllstoff), enthalten. Füll- und Verstärkungsstoffe, Farbpigmente, synthetische und natürliche Harze, kautschukartige Produkte und Flammschutzmittel werden in einer Menge entsprechend den bestehenden Bedürfnissen eingesetzt.

Das Einarbeiten der Nukleierungsmittel in das Propylenpolymerisat geschieht auf bekannte Weise, beispielsweise mittels Mischer, Extruder, Walze, Kneter, Lufthomogenisierung, wobei bei der Einarbeitung auch ein Masterbatch der Nukleierungsmittel eingesetzt werden kann.

Das erfindungsgemäße Verfahren bringt nicht nur eine verbesserte Zähigkeit und verbesserte Härte der Formteile im Vergleich zu Formteilen aus einer gleichen Formmasse ohne die genannten Nukleierungsmittel, sondern es werden auch bessere Verarbeitungseigenschaften erzielt, indem kürzere Zykluszeiten beim Spritzguß und höhere Abzugsgeschwindigkeiten bei der Extrusion von Rohren und Profilen möglich sind. Außerdem wird beim Blasformen durch Ausbildung einer höherkristallinen Haut auf der Oberfläche des Vorformlings das Ankleben der plastischen Masse an das Werkzeug vermindert.

Das erfindungsgemäße Verfahren kann deswegen mit besonderem Vorteil eingesetzt werden beim Spritzgießen dickwandiger Teile (z.B. Kühlwasserausgleichsbehälter für Kraftfahrzeuge), bei der Extrusion von Tafeln und Rohren und beim Blasformen von Hohlkörpern, Konturen (z.B. Koffer) und technischen Teilen (z.B. Stoßfänger, und Spoiler).

Wenn Natriumbenzoat als Nukleierungsmittel verwendet wird, kann auf die Gegenwart von Calciumstearat als Säurefänger verzichtet werden. Calciumstearat hat außerdem einen negativen Einfluß auf die Nukleierung mit Natriumbenzoat.

Die folgenden Beispiele sollen die Erfindung erläutern:

### Beispiele und Vergleichsbeispiele

Mehrere hochmolekulare (MFI 230/5 ≦ 5 g/10 min) und niedermolekulare (MFI 230/5 ≧ 5 g/10 min) pulverförmige Homopolymerisate und Copolymerisate des Propylens mit Ethylen wurden mit verschiedenen Nukleierungsmitteln gemischt und - entweder als Pulver oder als Granulat - zu Prüfkörpern verarbeitet. In der gleichen Weise wurden Prüfkörper, welche kein Nukleierungsmittel enthielten, zum Vergleich hergestellt. An den Prüfkörpern wurden Härte und Zähigkeit gemessen. Die Zusammensetzung der geprüften Formmassen und die Ergebnisse der Messungen sind in den Tabellen 1 und 2 zusammengestellt.

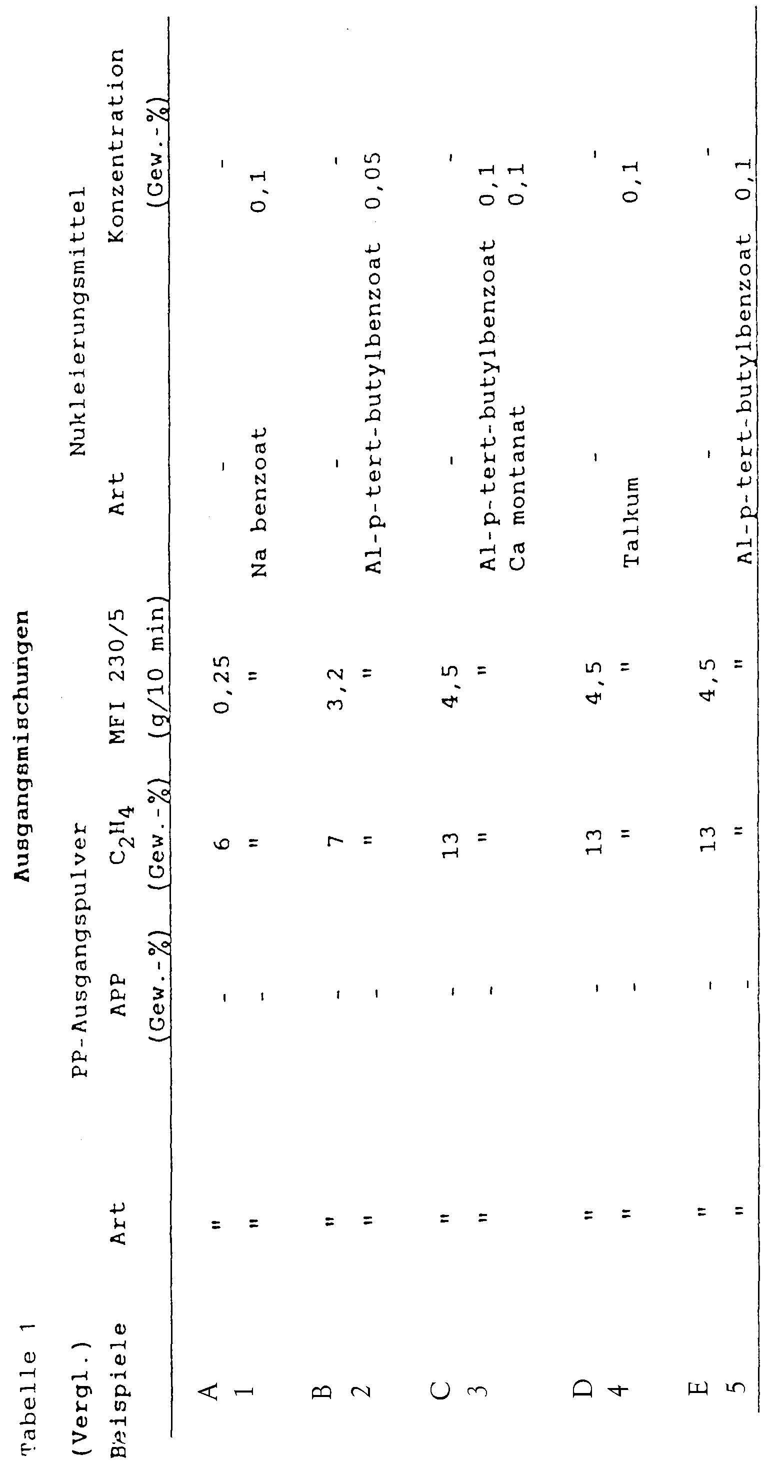

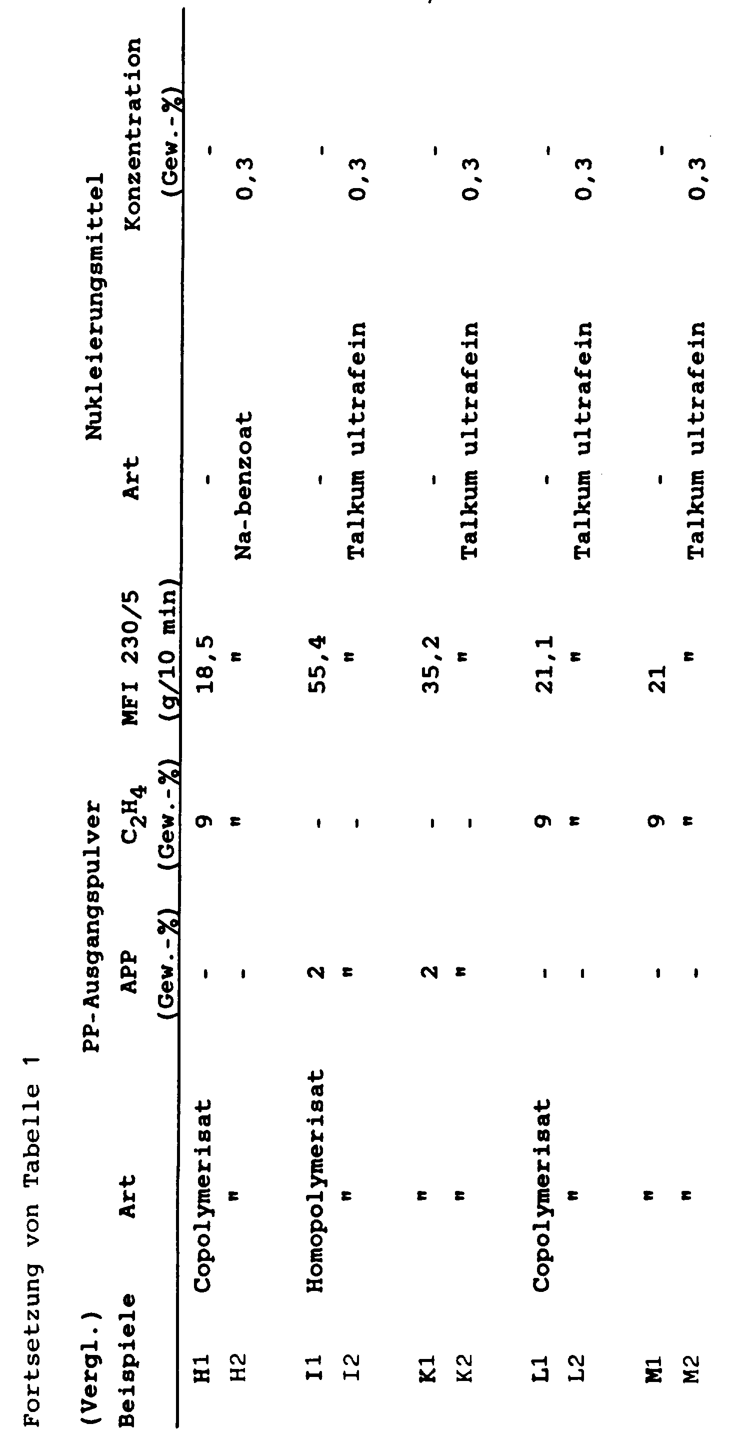

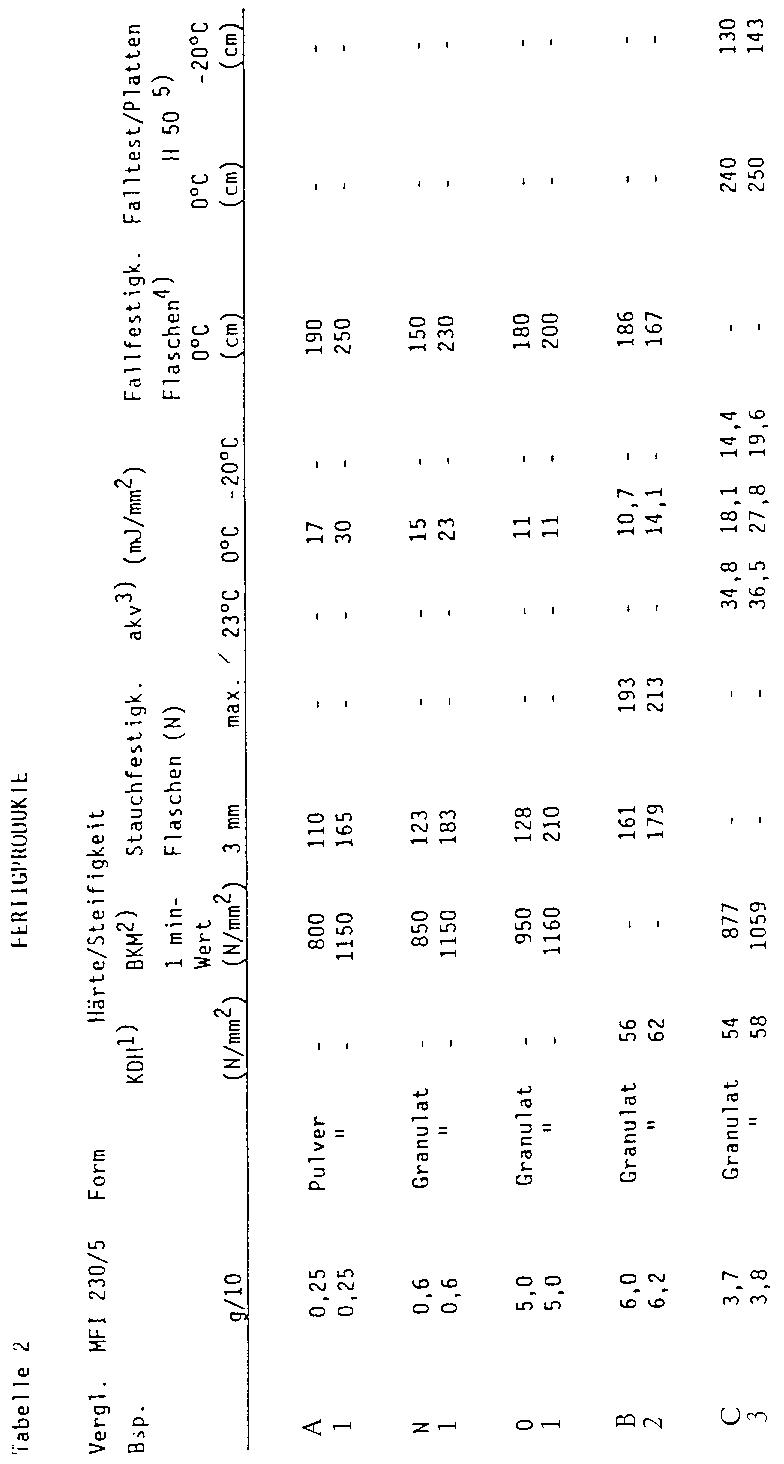

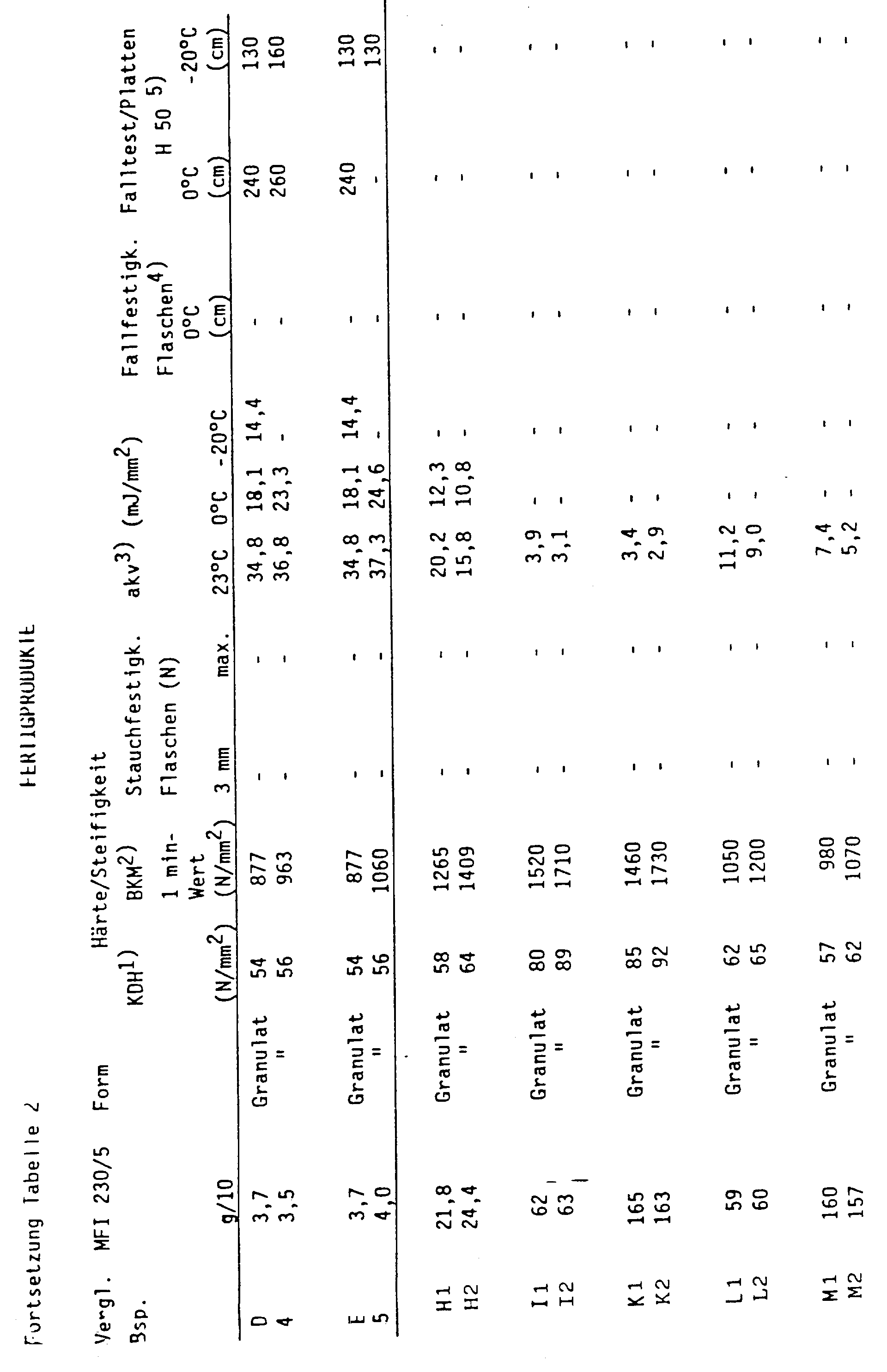

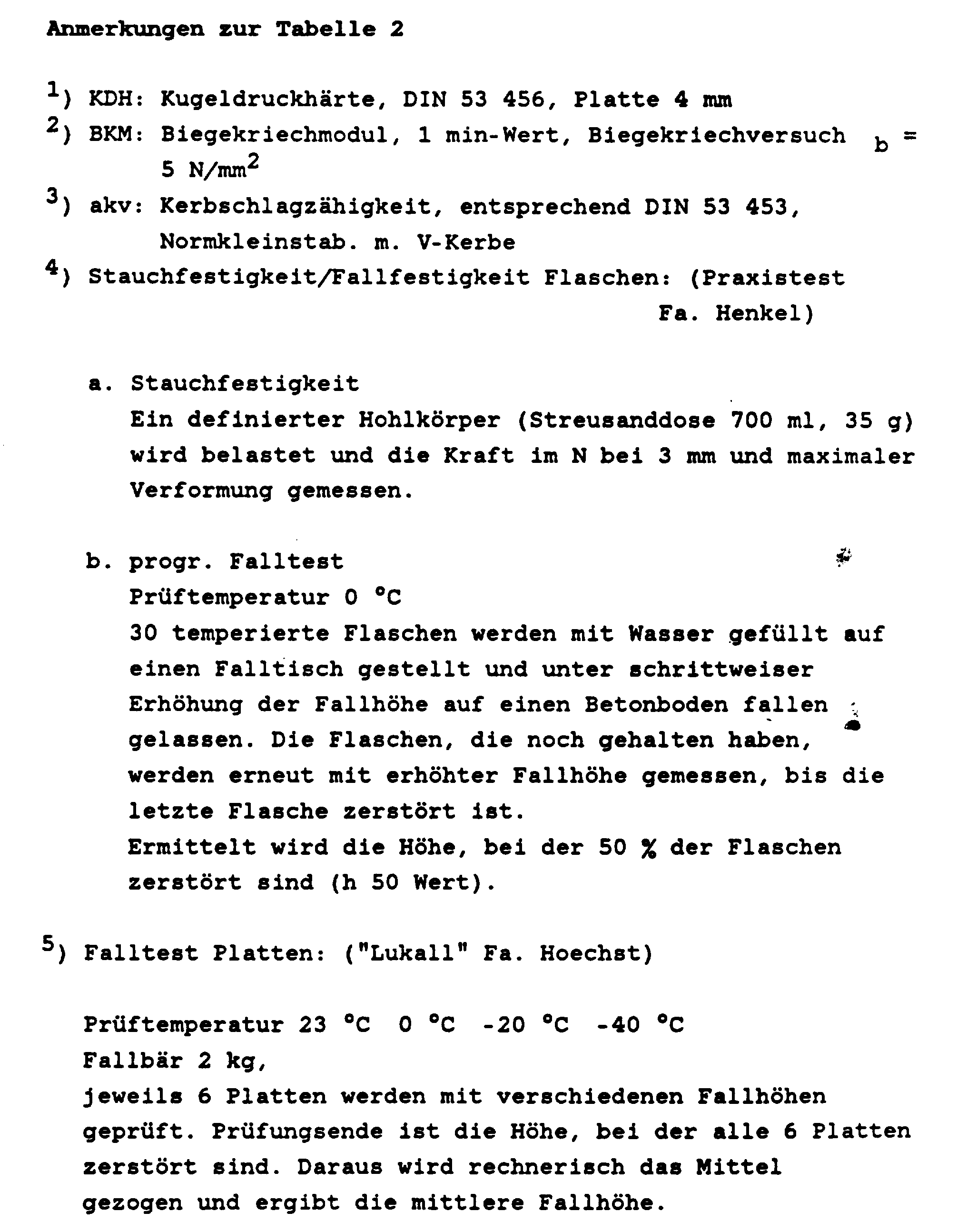

## Patentansprüche

1. Verfahren zur Verbesserung von Härte und Zähigkeit von Polypropylenformteilen durch Zugabe von Nukleierungsmitteln zu der zur Herstellung der Formteile vorgesehenen Formmasse, dadurch gekennzeichnet, daß man zu der im wesentlichen aus einem Homopolymerisat oder einem Copolymerisat des Propylens mit Ethylen oder Buten mit einem Schmelzindex MFI 230/5 von kleiner oder gleich 5 g/10 min bestehenden Formmasse 0,001 bis 0,5 Gew.-%, bezogen auf die Formmasse, eines Nukleierungsmittels aus der Gruppe Natriumbenzoat, Natriummontanat, Calciummontanat, Aluminium-p-tert.-butylbenzoat, Naphthalimid, Dibenzylidensorbitol und Talkum zugibt, wobei die Korngröße dieser Nukleierungsmittel kleiner oder gleich 20 µm ist,

2. Verfahren nach Anspruch 1, dadurch gekennzeichnet, daß das Nukleierungsmittel Natriumbenzoat, Aluminium-p-tert.-butylbenzoat, Calciummontanat, oder Talkum ist.

3. Verfahren nach Anspruch 1, dadurch gekennzeichnet, daß das Nukleierungsmittel Natriumbenzoat ist.

## Claims

1. A process for improving the hardness and toughness of polypropylene moldings by adding nucleating agents to the molding material intended for the production of the moldings, wherein 0.001 to 0.5% by weight, based on the molding material, of a nucleating agent from the group consisting of sodium benzoate, sodium montanate, calcium montanate, aluminum p-tert-butylbenzoate, naphthalimide, dibenzylidenesorbitol and talc is added to the molding material essentially consisting of a homopolymer or a copolymer of propylene with ethylene or butene, having a melt flow index MFI 230/5 of less than or equal to 5 g/10 min, the particle size of this nucleating agent being less than or equal to 20 µm.

2. The process as claimed in claim 1, wherein the nucleating agent is sodium benzoate, aluminum p-tert-butylbenzoate, calcium montanate or talc.

3. The process as claimed in claim 1, wherein the nucleating agent is sodium benzoate.

## Revendications

1. Procédé pour améliorer la dureté et la ténacité de pièces moulées en polypropylène par adjonction d'agents de nucléation à la masse de moulage prévue pour la fabrication des pièces moulées, caractérisé en ce qu'on ajoute à la masse de moulage, constituée essentiellement par un homopolymère ou un copolymère du propylène avec l'éthylène ou le butène possédant un indice de fusion MFI 230/5 inférieur ou égal à 5 g/10 mn, 0,001 à 0,5 % en poids, rapportés à la masse de moulage, d'un agent de nucléation tiré du groupe benzoate de sodium, montanate de sodium, montanate de calcium, benzoate p-tert.-butyl d'aluminium, de naphtalimide, dibenzylidène-sorbitol et talc, la taille des grains de cet agent de nucléation étant inférieure ou égale à 20 µm.

2. Procédé selon la revendication 1, caractérisé en ce que l'agent de nucléation est du benzoate de sodium, du benzoate-p-tert.-butyle d'aluminium, du montanate de calcium ou du talc.

3. Procédé selon la revendication 1, caractérisé en ce que l'agent de nucléation est du benzoate de sodium.
